Europäisches Patentamt

European Patent Office

Office européen des brevets

(11) Publication number: **0 187 873**
**B1**

(12) **EUROPEAN PATENT SPECIFICATION**

(45) Date of publication of patent specification: **14.06.89**

(21) Application number: **84309100.0**

(22) Date of filing: **27.12.84**

(51) Int. Cl.⁴: **B 60 R 25/02**

(54) Keyless steering-shaft lock.

(43) Date of publication of application:
**23.07.86 Bulletin 86/30**

(45) Publication of the grant of the patent:
**14.06.89 Bulletin 89/24**

(84) Designated Contracting States:
**DE FR GB**

(56) References cited:
**EP-A-0 121 165**

**PATENT ABSTRACTS OF JAPAN, vol. 8, no. 100
(M-295) 1537r, 11th May 1984; & JP - A - 59 14
551 (KOKUSAN KINZOKU KOGYO K.K.)
25.01.1984**

(73) Proprietor: **KOKUSAN KINZOKU KOGYO
KABUSHIKI KAISHA
8-2, Kamata 2-chome
Ohta-ku Tokyo (JP)**

(72) Inventor: **Sato, Hidekazu
1004, Nakasone Oaza-Minami
Kasukabe-shi Saitama-ken (JP)**

(74) Representative: **Barker, Rosemary Anne et al
Barlow, Gillett & Percival 94 Market Street
Manchester M1 1PJ (GB)**

Courier Press, Leamington Spa, England.

# EP 0 187 873 B1

**Description**

This invention relates generally to a keyless steering-shaft lock. More specifically, it relates to an improved keyless steering-shaft lock wherein a shaft-locking and unlocking bar is operated by an electric motor by way of reduction gearing including an externally toothed input gear fixedly mounted on an output shaft of the motor. A steering-shaft locking arrangement having all these features is disclosed in "Patent Abstracts of Japan", vol. 8, no. 100, (M-295) (1537), of 11th May 1984.

Conventionally steering locks have been designed as mechanical locks which are key-operated for on-off operation of the lock.

More recently, however, keyless steering locks have been developed. With one of these, an operator actuates a plurality of specifically selected button switches one after another so as to automatically unlock the lock and make the steering shaft operable at the wish of the operator. The locking and unlocking bar is driven by an electric motor by way of reduction gearing, as in the above-mentioned prior publication. Other examples are known wherein a rotator is interposed between the gearing and the locking bar, the rotator having a cam section for actuation of the bar in the desired sense, that is, either in the shaft-locking or unlocking direction, as the case may be.

It is common practice to mount such a keyless steering-shaft lock at substantially the same position of the steering column as the conventional lock. Therefore, the overall size of the locking arrangement must be minimised to avoid physical contact by the vehicle driver and maintain the freedom of movement of the latter. The electric motor for driving the locking bar between its locking and unlocking positions must have the smallest possible external dimensions (i.e. be a miniatured motive power unit). On the other hand, where a rotator is provided, the motor must have a sufficiently high speed to consistently transmit enough rotational torque to the rotator which causes the shaft-locking bar to move between its locking and unlocking position. To accomplish this transmission, however, the reduction gearing arranged between the motor and the rotator must have larger external dimensions which may substantially hinder the desired freedom of movement of the driver.

It is therefore an object of the present invention to provide an improved keyless steering-shaft lock having reduction gearing of substantially reduced external dimensions but without impaired power delivery performance.

This object is achieved in accordance with the invention in a keyless steering-shaft lock of the type mentioned above in that the reduction gearing comprises additionally a plurality of intermediate planetary pinions mounted around the input gear and meshing therewith, each having a central shaft, the central shafts of these pinions being arranged to make a common planetary motion along an imaginary circle concentric with the output shaft of the motor, a first stationary-mounted internal gear meshing with the planetary pinions, and a second rotatably-mounted internal gear also meshing with the planetary pinions and connected drivingly to the locking bar by way of the rotator, the number of teeth on the second internal gear being slightly larger than on the first internal gear.

Either one of these two internal gears preferably has profile-shifted teeth.

The invention will be described further, by way of example, with reference to the accompanying drawings, in which:

Fig. 1 is a sectional elevation of a preferred embodiment of the steering lock of the invention;

Fig. 2 is a top plan view of the steering lock shown in Fig. 1 wherein a top lid cover has been omitted for clearer illustration of the inside arrangement;

Fig. 3 is an enlarged sectional view of a bearing arrangement for the steering shaft in the steering lock shown in Figs. 1 and 2;

Fig. 4 is a slightly enlarged section taken along the section line A—A' shown in Fig. 2; and

Fig. 5 is an end view of the rotator in the steering lock shown in Figs. 1 to 4.

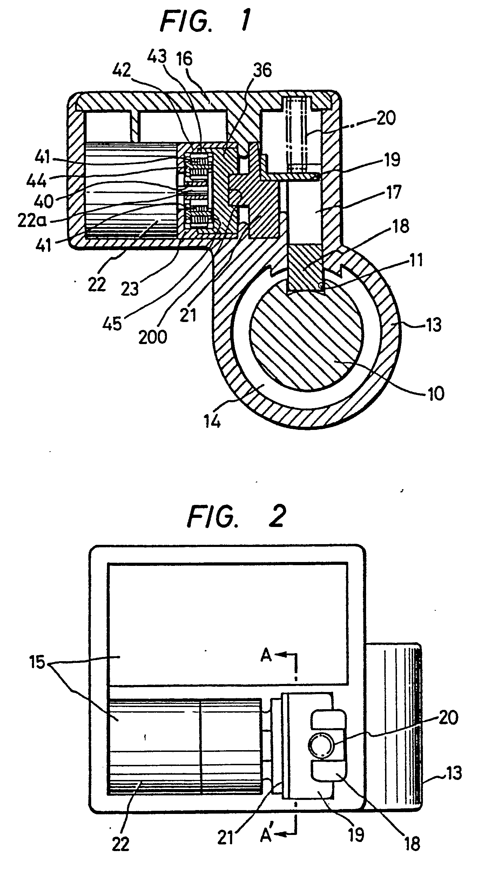

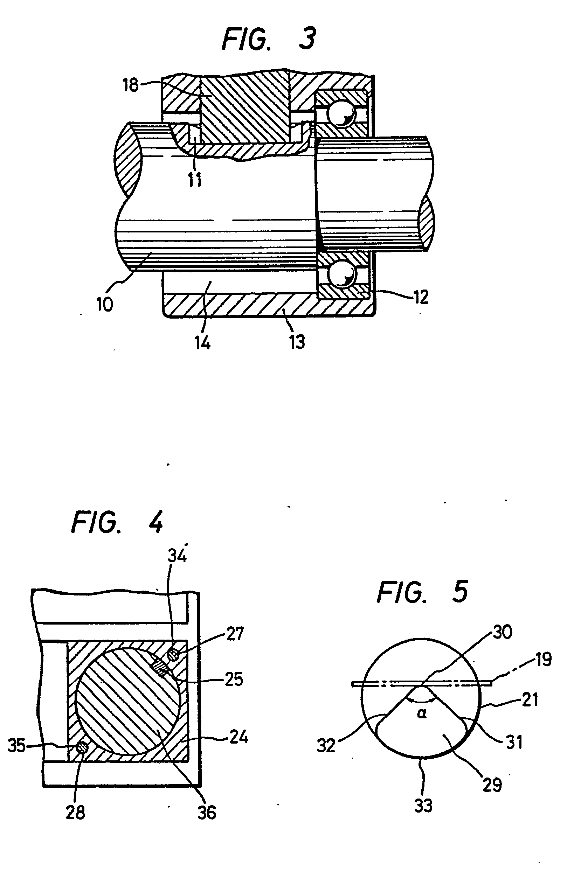

As illustrated in Figs. 1 and 3 of the drawings, a conventional steering shaft 10 is rotatably supported by a ball bearing unit 12 which is mounted in a housing 13 of a preferred embodiment of the steering lock of the invention. This housing 13 is formed with a hollow cylindrical portion 14 in which the bearing unit 12 is mounted, for example, by a pressure fit.

In the upper part of the housing 13, a guide opening 17 is formed which is in communication with the hollow cylindrical space 14 and with container chambers 15. The upper part of the housing 13 is tightly and rigidly closed by a push-fit closure lie 16 which helps to prevent theft.

A locking bar 18 is slidably mounted on the guide opening 17, the bar being shown in Fig. 1 in its advanced locking position in engagement with a reception recess 11 formed in the steering shaft 10. A so-called "hanger member" 19 slides in unison with the locking bar 18. The bar 18 and the hanger member are usually fixed together.

A coil spring 20 is mounted under compression between the lid 16 and the hanger member 19 and thus urges the bar 18 to move downwards in Fig. 1 towards the locking position. A member 21 called "a rotator" is kept in pressure contact with the hanger member 19. This rotator 21, the end of which is shown in Fig. 5, acts to prevent excess advancement of the bar 18.

An electric motor 22, a gearing unit 23 and an output shaft wheel 36 are mounted in the housing 13 as shown in Fig. 1. Rotation is transmitted from the motor 22 through the gearing unit 23 to the output shaft wheel 36. The gearing unit 23 is housed in a casing 24, the cross-section of which is shown in Fig. 4.

2

EP 0 187 873 B1

The gearing unit 23 includes a central, externally toothed input gear 40 fixedly mounted on the output shaft 22a of the motor 22. Mounted around the input gear 40 and meshed therewith there are a plurality of intermediate planetary pinions 41, each having a central shaft 44. These pinion shafts 44 are arranged to perform a planetary motion along an imaginary circle concentric with the motor output shaft 22a. A first stationary-mounted internal gear 42 meshes with the planetary pinions 41 and a second rotatably-mounted internal gear 43, which has a slightly larger number of teeth than the first gear 42, also meshes with the planetary pinions 41. The second internal gear 43 is formed by a part of the output shaft wheel 36 which is mechanically coupled to the rotator 21, which in turn mechanically controls the position of the bar 18.

The stationary internal gear 42 is integral with the housing 13. The planetary pinions 41 are preferably arranged in diametrically opposing pairs, the shafts 44 of these pinions 41 preferably being rotatably supported on a common bearing ring 45. One of the internal gears 42, or 43 are preferably of the profile-shifted type.

In the casing 24 two diametrically opposite openings 27 and 28 are provided for housing respective contactless reed switches 34 and 35, as shown in Fig. 4. The former switch 34 is adapted for sensing the shaft-unlock position, while the latter switch 35 senses the shaft-lock position.

When the motor 22 is energized to rotate, output torque is transmitted therefrom through the reduction gearing 23, the output shaft wheel 36, a mechanical coupling 200 provided between the latter and the rotator 21 and by way of the rotator 21 and the hanger member 19 to the locking bar 18 so as to raise the latter from its locking position shown in Fig. 1 towards its unlocking upper position.

As shown in Fig. 5, the end of the rotator 21 is formed with a sector cam 29 having a cam angle alpha ($\alpha$) of approximately 15 to 150 degrees, most preferably about 90 degrees. The cam angle is measured between respective slide slopes 31 and 32 around a slightly rounded apex 30.

During the shaft-locking stage, the switch 35 is located nearest to a shaft-position indicator magnet 25 embedded in the output shaft wheel 36 so it is energized. At the same time, the other switch 34 is positioned remotest from the same magnet 25, so that switch 34 is de-energized.

When a certain switch, not shown, is turned on, the motor 22 is rotated. Motion is transmitted therefrom through the reduction gearing 23, the output shaft wheel 36 and the coupling 200 to the rotator 21 and thence to the hanger member 19 fixedly attached to the locking bar 18, so as to raise the latter in Fig. 1 towards its unlocking position.

As the bar 18 moves towards its unlocking position, the magnet 25 is brought towards its position adjacent the switch 34, so as to sense the unlocking position and to de-energize the motor 22 by opening the on-off switch, not shown, for the latter.

In this way, the precise locking and unlocking operations can be assured.

In place of the aforementioned reed switches 34, 35, microswitches may be used if desired.

A numerical example of the main constituting elements of the reduction gearing 23, together with the general mathematical relationship governing them is shown hereinunder:

| Gears | Symbol of the number of teeth | Practical number of teeth |
|---|---|---|
| Input gear 40 | $Z_a$ | 10 |
| Planetary pinions 41 | $Z_b$ | 15 |
| Stationary internal gear 42 | $Z_c$ | 40 |
| Output internal gear 43 | $Z_d$ | 42 |

When expressing the respective numbers of revolutions of the input gear 40 and the output gear 43 by $n_a$ and $n_b$, respectively, then:

$$\frac{n_b}{n_a} = \frac{Z_a (Z_d - Z_c)}{Z_d (Z_a + Z_c)}$$

To obtain an example of the results, the foregoing practical numbers of teeth are introduced into the foregoing formula. When then obtain:

$$n_b/n_a = 1/105$$

This numerical result indicates that the effects of the above-described reduction gearing 23 are superior. The external dimensions thereof are compact yet a large reduction ratio may be obtained. In order that both the stationary internal gear 42 and the rotatable internal output gear 43 are able to co-operate with the planetary pinions 41, one of these is preferably of the profile-shifted type and the number of teeth on the rotatable output internal gear 43 is slightly larger than on the stationary internal gear 42.

3

# EP 0 187 873 B1

It will be clear from the foregoing that by adopting the specifically designed superior reduction gearing according to the invention, the motor 22 and the reduction gearing 23 may have the smallest possible external dimensions without sacrificing the desired high torque delivery performance in the motor-driven, slide bar type steering shaft lock arrangement.

## Claims

1. A keyless steering-shaft lock wherein a locking bar (18) is operated by an electric motor (22) by way of reduction gearing (23) and a rotator (21), the reduction gearing including an externally toothed input gear (40) fixedly mounted on an output shaft (22a) of the motor (22), characterised in that the reduction gearing comprises additionally a plurality of intermediate planetary pinions (41) mounted around the input gear (40) and meshing therewith, each having a central shaft (44), the central shafts (44) of these pinions (41) being arranged to make a common planetary motion along an imaginary circle concentric with the output shaft (22a) of the motor (22), a first stationary-mounted internal gear (42) meshing with the planetary pinions (41), and a second rotatably-mounted internal gear (43) also meshing with the planetary pinions (41) and connected drivingly to the locking bar (18) by way of the rotator, the number of teeth on the second internal gear (43) being slightly larger than on the first internal gear (42).

2. A keyless steering shaft lock as claimed in claim 1, wherein either one of the two internal gears (42, 43) has profile-shifted gear teeth.

## Patentansprüche

1. Lenkspindelschloß ohne Schlüssel, worin eine Verriegelungsstange (18) durch einen Elektromotor (22) vermittels Untersetzungsgetriebe (23) und einen Rotor (21) betätigt wird, wobei das Untersetzungsgetriebe ein außenverzahntes Eingangsgetriebe (40) einschließt, das fest auf einer Abtriebswelle (22a) des Motors (22) angebracht ist, dadurch gekennzeichnet, daß das Untersetzungsgetriebe zusätzlich eine Vielzahl von intermediären Planetenrädern (41) umfaßt, die um das Eingangsgetriebe (40) herum angebracht sind und damit kämmen, wobei jedes eine zentrale Welle (44) aufweist und die zentralen Wellen (44) dieser Räder (41) so angeordnet sind, daß sie eine gemeinsame Planetenbewegung entlang einem imaginären, mit der Abtriebswelle (22a) des Motors (22) konzentrischen Kreis durchführen, wobei ein erstes, ortsfest angebrachtes Innengetriebe (42) mit den Planetenrädern (41) kämmt und ein zweites, drehbar angebrachtes Innengetriebe (43) ebenfalls mit den Planetenrädern (41) kämmt und mit der Verriegelungsstange (18) vermittels des Rotors antriebsmäßig verbunden ist, wobei die Anzahl der Zähne auf dem zweiten Innengetriebe (43) geringfügig größer ist als auf dem ersten Innengetriebe (42).

2. Lenkspindelschloß ohne Schlüssel, wie in Anspruch 1 beansprucht, worin eines der beiden Innengetriebe (42, 43) profilverschobene Getriebezähne aufweist.

## Revendications

1. Dispositif der verrouillage de colonne de direction sans clé, dans lequel une barre de verrouillage (18) est actionnée par un moteur électrique (22) au moyen d'un mécanisme réducteur (23) et d'un organe rotateur (21), le mécanisme réducteur comportant un pignon d'entrée (40) à denture externe qui est monté claveté sur un arbre de sortie (22a) un moteur (22), caractérisé par le fait que le mécanisme réducteur comprend additionnellement plusieurs pignons satellites intermédiaires (41) montés autour du pignon d'entrée (40) et en prise avec lui, chacun comportant un arbre central (44), les arbres centraux (44) desdits pignons (41) étant agencés pour effectuer un mouvement planétaire commun le long d'un cercle imaginaire concentrique à l'arbre de sortie (22a) du moteur (22), une première couronne à denture interne (42) montée fixe et en prise avec les pignons satellites (41), et une seconde couronne à denture interne (43) montée tournante et également en prise avec des pignons satellites (41) et reliée fonctionnellement à la barre de verrouillage (18) par l'intermédiaire de l'organe rotateur, le nombre de dents de la seconde couronne à denture interne (43) étant légèrement plus grand que celui de la première couronne à denture interne (42).

2. Disposifit de verrouillage de colonne de direction sans clé tel que revendiqué dans la revendication 1, dans lequel l'une ou l'autre des deux couronnes à denture interne (42, 43) comporte des dents à profil décalé.

4

## FIG. 1

## FIG. 2

FIG. 3

FIG. 4

FIG. 5